(19) Europäisches Patentamt
European Patent Office
Office européen des brevets

(11) **EP 4 621 377 A1**

(12) **EUROPEAN PATENT APPLICATION**

(43) Date of publication:
**24.09.2025 Bulletin 2025/39**

(21) Application number: **24164602.5**

(22) Date of filing: **19.03.2024**

(51) International Patent Classification (IPC):
**G01M 13/021** (2019.01) **F16H 57/01** (2012.01)
**G01M 13/04** (2019.01)

(52) Cooperative Patent Classification (CPC):
**G01M 13/021; F16H 57/01; G01M 13/04;**
F16H 2057/012

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **S360 Group B.V.**
**5342 NJ Oss (NL)**

(72) Inventors:
• **ANGELIS, Georgo Zorz**
**5342 NJ Oss (NL)**
• **KOLSTEEG, Jean Mats**
**5342 NJ Oss (NL)**
• **van GENUCHTEN, Henricus Cornelis Maria**
**5342 NJ Oss (NL)**

(74) Representative: **DeltaPatents B.V.**
**Fellenoord 370**
**5611 ZL Eindhoven (NL)**

(54) **MEASURING AND LIFE ESTIMATION SYSTEM FOR A PLANETARY GEARBOX**

(57) The invention relates to a method and system for estimating life of a planetary gearbox (100). The system comprises an arrangement of sensors (S1 - S8) for obtaining field operational data relating to loading and speed of components of the gearbox and a processing unit (150) configured to execute method steps of the invention comprising:

i) receiving sensors signals during a series of time intervals t; and for each time interval t

ii) calculating a distance travelled $L_i$ by each gear (105, 107, 110) and each bearing (115) of the gearbox, based on the received sensor signals;

iii) calculating the load acting on each bearing and on each, based on the received sensor signals;

iv) calculating a scale parameter $A_i$ of a Weibull distribution associated with the life of each gear and bearing, based on a probabilistic life that is determined from the load calculated in step iii) and a known rating for each of these components, to obtain an operating condition severity $A_i^{1/k_i}$, where $k_i$ is a known shape parameter of the Weibull distribution;

v) calculating a used capacity $c_i(t)$ of each bearing and each gear by summing the operating condition severity $A_i^{1/k_i}$ obtained for each time interval multiplied by the distance travelled $L_i$ by the component during the associated time interval, and

vi) calculating a used capacity $C(t)$ for the gearbox, based on the used capacity calculated for each component in step v) and on a shape parameter $k_s$ of a Weibull distribution associated with the life of the gearbox.

A remaining useable capacity of the gearbox (100) may be determined from the calculated used capacity $C(t)$, which is turn may be used to estimate a remaining useable life of the gearbox.

Figure 1

## Description

The present invention relates to the field of determining drive-line loads associated with a planetary gearbox and is more particularly directed to a method and system which uses the determined loads to estimate remaining life. The invention further provides a method of determining the loads.

## Technical Background

An example of a gearbox life estimation system for a wind turbine is known from EP1930855. The system includes one or more sensors for obtaining field operational data relating to gearbox loading from a gearbox component, and a processor configured to receive the sensor signal(s) and calculate an average load on each gearbox component for a predetermined time interval. The calculation is based on the sensor data, gearbox design data, a load on the turbine main shaft generated via a wind simulation model, and an excitation force associated with a detected incipient fault. A stress amplitude for the gearbox is then computed, a fatigue life for the components is obtained and a cumulative damage for the predetermined time interval is computed from the fatigue life. An estimate for the remaining life of the gearbox is then obtained by subtracting the cumulative damage from an initially estimated residual life.

There is room for improvement in terms of defining a system that enables a more accurate estimation of remaining life based on variable operating conditions. The method of determining the loads on the gearbox components disclosed in EP1930855 is also rather complex and relies on sensors provided on different components.

Several load/torque sensing methods are known that measure the load/torque on a rotating shaft by measuring the shear strain components, which correlate with torque, and/or the bending strains, which correlate with disturbance loads. Measuring with a sensor on a rotating part often requires power and data transfer from the device. This results in unwanted modifications of the system, complexity and high costs. Measuring the shear and bending strain with electrical strain gauges in a robust way with the demanded accuracy on these rotating components is difficult. Electrical strain gauges are not immune to electric and magnetic inference which causes a potential problem in typical real-life environments such as wind turbines and electric vehicle drivetrains etc. The numerous electrical connections (2-4 wires per strain gauge) are prone to failure.

A method of determining loads on a bearing is disclosed in GB2582597, whereby the loads are determined using an arrangement of n uniformly spaced strain sensing elements, preferably embodied as a fibreoptic sensor module, which are disposed on a stationary ring of the bearing. There is room for improvement in terms of defining a method and sensor arrangement that is adapted for a planetary gearbox.

## Summary

In a first aspect, the present invention relates to a method and system for estimating life of a planetary gearbox, comprising gearbox components which include an outer ring gear, a sun gear and a number of planet gears supported on a planet carrier via a corresponding number of bearings. In order to plan maintenance effectively, it is useful to have an indicator of remaining useable life (RUL) of a gearbox. The operating history, including the load on the gearbox components, is obtained so that at a particular time, i.e. after a given number of revolutions, it can be estimated how many revolutions the gearbox can survive with a certain probability. Typically, the life of bearings and gears is expressed as an $L_{10}$ life and the survival probability is selected to be 90%. In order to assess mission risk, it is also useful to be able to estimate the probability that the gearbox, based on a certain operating history, will survive a certain number of revolutions.

In the method and system of the invention, the operating conditions are measured and the operating conditions history is stored as a single indicator C(t) which reflects a used capacity for the gearbox as a whole.

The method comprises receiving sensor signals relating to loading and rotational speed of the gearbox components at series of time intervals t. In a preferred example, the torque acting on the planet carrier is calculated from the received sensor signals and the load on each bearing, on each planet gear, on the outer ring gear and on the sun gear is derived from the calculated torque based on the gearbox geometry.

The method further comprises calculating a distance travelled $L_i$ by each gear and bearing during each time interval t, based on the received sensor signals, whereby distance travelled may be expressed as number of revolutions or number of stress cycles. In a preferred embodiment, the received sensor signals enable the distance travelled by one of the gearbox components to be calculated, which will be referred to as a reference component. The reference component may be the planet carrier, or any of the gears or bearings. When the reference component is the stationary outer ring gear, the "distance travelled" may be expressed in terms of the number of stress cycles experienced by the gear teeth of the outer ring gear. Based on gearbox geometry, the distance travelled $L_i$ by each component can be derived from the distance travelled by the reference component. Preferably, the distance travelled $L_i$ is expressed in the same units and is related to the distance travelled by the reference component. In a preferred example, the planet carrier is the reference component and the distance travelled by each gear and bearing during a time interval is expressed as a number of revolutions of the planet carrier.

In a next step, the calculated load on each component and a known basic load rating for each component is used to derive a parameter $A_i^{1/k_i}$ that is indicative of operating condition severity, whereby $A_i$ is a scale parameter of a Weibull distribution associated with a life of each gear and bearing and $k_i$ is known shape parameter of the Weibull distribution. Suitably, the parameter $A_i^{1/k_i}$ is derived based on a probabilistic life of each component that can be calculated using parameters that are known from literature, provided by manufacturers, or which can be determined experimentally. Typically, the $L_{10}$ life is calculated in order to derive $A_i^{1/k_i}$.

For example, the $L_{10}$ life of a bearing may be calculated according to:

$$L_{B10} = (Cr/P)^p,$$

where

$C_r$ is a basic dynamic load rating [N] specified by the bearing manufacturer
P is the load during operation [N] as calculated from the received sensor signals.
p is an exponent (3 for ball bearings, 10/3 for roller bearings)

At life $L_{10}$, the associated survival probability is 0.9 and the Weibull parameters may be derived according to:

$$A^{1/k} = \log\left(\frac{1}{0.9}\right)^{\frac{1}{k}} * \left(\frac{1}{LB10}\right).$$

The Weibull equation is generally expressed as $\Pr(L>l) = S$, with $\log(1/S) = Al^k$. Again, taking a bearing as an example, L represents the bearing life (in millions of revolutions) and S is the survival probability for a given number of revolutions I under operating condition A.

The prognostic model applied in the present invention is rewritten in terms of (used) capacity, whereby capacity C is generally defined as $C = A^{1/k} L$, and

$$\Pr(C > c) = \exp(-c^k),$$

where c is an exhibited used capacity.

The distribution of used capacity is thus independent of the operating condition and number of revolutions / distance travelled / stress cycles. This understanding allows variable operating conditions to be accounted for, whereby it is assumed that used capacity accumulates as:

$$A_1^{1/k}L_1 + A_2^{1/k}L_2 + A_3^{1/k}L_3 \ldots\ldots$$

where $A_1, A_2, A_3 \ldots$ represent the scale parameter of the Weibull distribution calculated during time intervals 1, 2 and 3 and $L_1, L_2, L_3$ represent the number of revolutions or distance travelled during the corresponding interval.

The method further comprises a step of calculating a used capacity $c_i(t)$ of each bearing and each gear, based on $c_i = A_i^{1/k_i}L_i$, by summing the operating condition severity $A_i^{1/k_i}$ obtained for each time interval multiplied by the distance travelled $L_i$ by the component during the associated time interval.

Suitably, the used capacity $c_i(t)$ of each component is stored so as to provide an operating history for each component. The associated distance travelled by the component at that used capacity may also be calculated and stored.

In a preferred embodiment, where the distance travelled by each component $L_i$ is expressed as the distance travelled by the reference component, the probabilistic life ($L_{10}$ life) of each gear and bearing, which is calculated in order to derive $A_i^{1/k_i}$, is translated in terms of the distance travelled by the reference component.

When the reference component is the planet carrier, the $L_{10}$ life of a bearing $L_{B10}$ may be translated into a corresponding reference life $L_{R10}$ expressed in millions of carrier revolutions according to:

$$L_{R10} = L_{B10}/\beta,$$

where $\beta$ is the known carrier to planet transmission ratio.

The used capacity for the bearing is then computed as

$$C = A^{1/k} \quad L = \log (1/0.9)^{1/k} * (L/L_{r10})$$

where L relates to the number of carrier revolutions.

A similar translation is suitably performed for each gear. It should be noted that the calculated used capacity for each component is invariant of the applicable transmission ratio.

The used capacity calculated for each component $c_i(t)$ allows the reliability or survival probability $S_i$ to be derived according to $S_i = \exp(-c_i^{k_i})$, whereby the associated Weibull distribution fits any operating condition. The traditional Weibull life distribution changes with changing operating conditions.

In a next step, the method comprises calculating a used capacity $C(t)$ for the gearbox as a whole, based on the used capacity $c_i(t)$ calculated for each component and on a shape parameter $k_S$ associated with a Weibull life distribution for the gearbox as a whole.

The survival probability $S_T$ for the gearbox as a whole is obtained from the product of the individual probabilities $S_i$. The obtained product $S_T$ cannot be rewritten in terms of a log(1/S) distribution, but as gearbox reliability closely resembles a Weibull distribution, it is possible to fit one.

A dataset may generated in advance based on modelling and simulation, in which a used capacity for each component is calculated at different values of distance travelled, to obtain a plurality of values for $S_T$. Preferably, after a certain operating time, a selection of previously stored values for $c_i(t)$ and associated distance travelled is obtained from the operating history and used to generate multiple values for $S_T$. Suitably, the stored values are selected such that the product of the individual component survival probabilities $S_T$ has a value of between 0.5 and 0.95.

A Weibull curve is fitted through the plurality of $S_T$ values and the shape parameter $k_S$ is derived via e.g. a least squares method.

The used capacity $C(t)$ for the gearbox is then calculated by summing the individual component used capacities $c_i(t)$ and multiplying the sum with exponent $(1/k_s)$.

Knowing the used capacity at time t enables a remaining useable capacity c' to be calculated, based on a conditional probability of failure given by:

$$Pr(C \le \tilde{c} + c' | C > \tilde{c}) = 1 - \alpha$$

whereby

$\alpha$ is a level of confidence or probability that the gearbox can survive a remaining useable capacity c' in addition to an exhibited used capacity c~.

For a desired level of confidence $\alpha$, it follows that the remaining capacity c' may be determined according to:

$$c' = \sqrt[k]{\tilde{c}^k - \log(\alpha) - \tilde{c}}$$

Typically, a survival probability of 0.9 is desired. The remaining usable capacity of each gear and bearing may be therefore be calculated. The remaining useable capacity for the gearbox as a whole $c_s'$ may also be obtained using the value calculated for $C(t)$ and the shape parameter $k_s$ of the Weibull distribution for the gearbox.

The method comprises a further step of calculating the remaining useable capacity $c_s'$ based on a desired survival probability $\alpha$ according to:

$$c_s' = \sqrt[k_s]{C(t)^{k_s} - \log(\alpha) - C(t)}$$

In order to determine a remaining useable life L', which is preferably expressed in terms of a distance travelled by the reference component, e.g. number of revolutions of the planet carrier, the calculated used capacity is converted based on the following formula:

$$L' = c' / A_F^{1/k}$$

whereby $A_F^{1/k}$ is an expected future operating condition severity that is estimated based on previously calculated values for $C(t)$ obtained during a time period in the past.

$A_F$ may be an average of all previously calculated values or may be a moving average that takes account of recent operating conditions or previous relevant periods. When the gearbox is part of a drivetrain in a wind turbine, periods which are relevant in view of weather conditions during a particular season may be taken into account.

As will be appreciated, the remaining useable capacity of each gear and bearing can also be calculated based on the used capacity c(t) calculated for each of these components during a period of relevance in the past.

The expression for conditional probability of failure can also be used to estimate mission risk, i.e. to estimate the probability that the gearbox can exhibit a desired amount of remaining capacity c'. In other words, by fixing c', the expression can be solved for $\alpha$.

The method preferably comprises a further step of calculating the probability $\alpha$ that the gearbox can exhibit a given amount of remaining capacity c' in addition to the calculated used capacity C(t) according to:

$$\alpha = \exp(C(t)^{ks} - (c' + C(t))^{ks})$$

Advantageously, the given amount i.e. a desired amount of remaining used capacity is estimated in terms of a period of time ahead $t_m$ based on values calculated for used capacity during a relevant operational period in the past $[t_1, t_2]$ according to:

$$c' \approx \frac{C(t2) - C(t1)}{t2 - t1} t_m.$$

Thus, by calculating the used capacity of the gears and bearings and of the gearbox, it is possible to estimate remaining usable capacity, remaining useful life and mission risk in an accurate fashion that takes account of varying operating conditions.

To further improve the accuracy of the calculation, additional factors that affect the life, i.e. survival probability of individual gearbox components, and thus the gearbox as a whole, may be taken into account. Lubrication condition of the oil in the gearbox is one such factor. An uneven distribution of the loading on the planet gears and planet gear bearings is another such factor. This is generally referred to as a load sharing factor or a mesh load factor.

In an embodiment, the method comprises further steps of:

- determining a load-sharing factor $K_y$ based on the received sensor signals; and
- using the determined load-sharing factor in the step of calculating the scale parameter Ai of the Weibull distribution of each gear and each bearing.

In one example of this embodiment, the load on one planet gear and associated planet bearing, as determined from the sensor data, is multiplied by the load sharing factor $K_y$. A remaining percentage of the load is distributed evenly over the other planet gears and associated bearings. Furthermore, 1/b of the sun gear and ring gear teeth are exposed to a higher load, whereby the higher load is obtained by multiplying the load determined from the sensor data with the calculated load-sharing factor $K_y$.

The load-sharing factor $K_y$ may be determined by receiving at least one strain signal from a strain sensor fixed to an outer circumference of the ring gear and comparing a peak strain that is measured for each planet gear. Other methods will be described later.

In an embodiment, the method comprises further steps of:

- receiving a temperature signal that is indicative of gearbox temperature;
- determining a lubrication-based life modification factor $a_L$ based on the received temperature signal; and
- using the determined modification factor $a_L$ in the step of calculating the scale parameter Ai of the Weibull distribution of each gear and each bearing.

In a preferred embodiment, the load on the gears and bearings of the planetary gearbox is derived from the torque acting on the planet carrier, whereby the torque is derived from a spatial strain distribution on the outer ring gear.

The method suitably comprises further steps of:

- receiving a strain signal from at least two strain sensors affixed to an outer circumference of the ring gear;
- deriving a spatial strain distribution from the received strain signals, and
- calculating the torque on the planet carrier based on the derived spatial strain distribution.

In a preferred embodiment, it is assumed that the sensor signals can be described as

$$S(t) = P(t).Ap + Q(t).B + noise(t)$$

whereby:

S(t) is a measurement matrix containing the signals received from the sensors at a plurality of sampling intervals;
P(t) is a matrix containing unknown strain basis functions associated with a payload, the payload being defined as the torque on the planet carrier;
Ap is a signature matrix containing signatures that describe how the sensor signals are influenced by the strain basis functions associated with the payload
Q(t) is a matrix containing unknown strain basis functions associated with a disturbance load that influences the measured strains; and
B is a signature matrix containing signatures that describe how the sensor signals are influenced by the strain basis functions associated with the disturbance load.

The method comprises a step of calculating the torque on the planet carrier from the strain basis function in the matrix P(t), whereby P is calculated according to

$$P = S \cdot B_0 \cdot pinv(Ap \cdot B_0)$$

where Bo is the nullspace of B.

The rotational speed of the planet carrier may also be derived from the strain basis functions in P(t) and thus the distance travelled during a time interval.

The signature matrices Ap and B may be derived in advance based on modelling and testing. Alternatively, or additionally, the signature matrix Ap may be derived from the sensor data.

In an advantageous further development, the method comprises a further step of deriving the signature matrix Ap from the measurement matrix S by:

- transposing S to obtain a matrix S';
- multiplying S' by S; and
- decomposing S'*S via a singular value decomposition or an eigen vector/eigen value decomposition.

Deriving the signature matrix Ap based on sensor data has the advantage of improving accuracy and also allows to account for position-dependent strain signals. It can happen that the amplitude measured by a particular strain sensor is position dependent, for example, when the outer ring gear has a non-uniform thickness and one or more strain sensors are located at a position of greater stiffness than other strain sensors.

In a still further development, the method comprises further steps of:

- calculating a scaled matrix $A_{sc} = ApK^{-1}$, where K is a diagonal scaling matrix containing gain factors that scale the amplitude measured by individual sensor to include position-dependent amplitude differences; and
- calculating the matrix of time basis functions P(t) associated with the payload using $A_{sc}$.

The torque on the planet carrier that is derived from the sensor data for each time interval is an unscaled torque $T_u$(t). Advantageously, the unscaled torque is calibrated based on a rated torque. This is beneficial because it enables the torque in operation to be scaled without the need for a reference sensor. Furthermore, the sensor system may be recalibrated after a period or to differentiate between strain caused by torque on the system versus loads that do not contribute to the torque but induce strain on the sensors and as a consequence the gearbox components involved. In some cases, a reference sensor might be used as part of a qualification or end of line test rig before the gearbox is brought into operation.

Advantageously, the method may further comprise steps of:

- detecting events when a rated torque at a rated speed is achieved during gearbox operation;
- determining a calibration factor c based on the detected events; and
- calculating a calibrated torque $T_c(t) = cT_u(t)$.

In a further aspect, the invention relates to a measurement and gearbox life estimation system comprising a sensor arrangement for obtaining field operational data relating to loading and speed of the gearbox components and a processing unit that is configured to receive signals from the sensor arrangement and implement the steps of the method according to the inventive embodiments as described above. The processing unit may, for example, be a computer that is supplied with the sensor arrangement, which is suitably programmed with algorithms for executing the method steps.

Processing of the sensor signals may also occur in a cloud-computing environment.

In a preferred example, the sensor arrangement comprises a number n of evenly spaced strain sensors configured for attachment to an outer circumference of the outer ring gear, whereby in attached condition the strain sensors are arranged with an angular spacing θ and cover at least a segment of the outer circumference equal to 90 degrees/b (number of planet gears).

In a particularly preferred embodiment, the sensor arrangement comprises at least one fibre optical sensor (FOS) module with n evenly spaced strain sensing elements, whereby n is between 4 and 8.

The sensor arrangement may also comprise a plurality of FOS modules which are arranged to cover a segment of the outer circumference greater than 90 degrees/b and may cover the full circumference of the outer ring gear. The FOS modules may be connected in series or may be connected in parallel using an additional optical splitter.

The angular spacing θ between the strain sensing elements is preferably selected to be 360 degrees divided by a prime number between 17 and 37. The inventors have found that such a spacing enables the strain signals associated with the planet passing frequency and associated higher harmonics to be distinguished from signals associated with disturbance loads. Furthermore, an FOS module that is configured for attachment to an outer ring gear of diameter D can be used on a planetary gear box having different numbers of planet gears. In a particularly preferred embodiment, the angular spacing θ between the strain sensing elements is selected to be 360 degrees dived by 29 or 39. The inventors have found that such a sensor arrangement enables the signals of interest to be derived without interference on any gearbox having 3-9 planet gears.

Preferably, the sensing fibre associated with the at least one FOS module is provided on a strip. In one example, the strip is formed by a thin metal sheet and the fibre is attached to the strip at the location of the sensing elements. The strip is then attached to the outer circumference of the ring gear via e.g. adhesive bonding or welding.

In a preferred embodiment, the at least one FOS module comprises a strip having a groove in which at least a section of the associated sensing fibre is arranged, whereby the sensing fibre is attached to the strip at longitudinal ends of the strip. Furthermore, the strip comprises holes at the location of the strain sensing elements, such that when the strip is placed on the outer circumference of the ring gear, the strain sensing elements can be fixed directly to the outer circumference of the ring gear.

In embodiments where the processing unit is configured to execute the method of the invention comprising the step of calculating a load-sharing factor $K_y$, and the sensor arrangement comprises n sensing elements arranged on the outer circumference of the ring gear, the load-sharing factor $K_y$ may be calculated by:

- comparing the planet passing strains measured at each of the n sensor locations for each of the planet gears with each other, and
- updating the comparison for each planet passing, to obtain $n * K_y$ values, whereby the calculated load sharing factor $K_y$ is obtained from an average of the $n * K_y$ values.

In a further development, wherein the system comprises a number of n sensing elements arranged around the circumference of the outer ring gear and the processing unit is configured to derive the spatial strain distribution on the outer ring gear, the processing unit is further configured to calculate the load sharing factor $K_y$ associated with the planet gears at each time instant by:

- defining a virtual sensor for each planet location, being a location where maximum strain is measured;
- estimating the strain level at that location using the measurement of a subset of sensors surrounding the planet; and
- comparing the strain level estimated at the location of each virtual sensor to calculate the load sharing factor $K_y$.

This has the advantage of enabling the strains to be compared with each other at the same time instant, under the same operating condition. When strains measured at different time intervals are compared with each other, there is a risk that a sudden change in operating condition adversely affects accuracy.

In a still further development, the processing unit is further configured to calculate load sharing and torque in real time and to monitor changes in the load sharing factor calculated at a certain torque level. This provides a degradation trend that can be used, for example, to detect bearing faults.

Other advantages associated with the invention will be apparent from the following detailed description and accompanying drawings.

## Brief description of the drawings

Fig. 1          shows a cut perspective view of a planetary gearset comprising a measuring and life-estimation system according to the invention;

Fig. 2 depicts steps of a method according to the invention for estimating a remaining useful life of the gearset;

Fig. 3a and 3b show examples of part of a sensor arrangement that may be used in the system and method of the invention.

## Detailed description

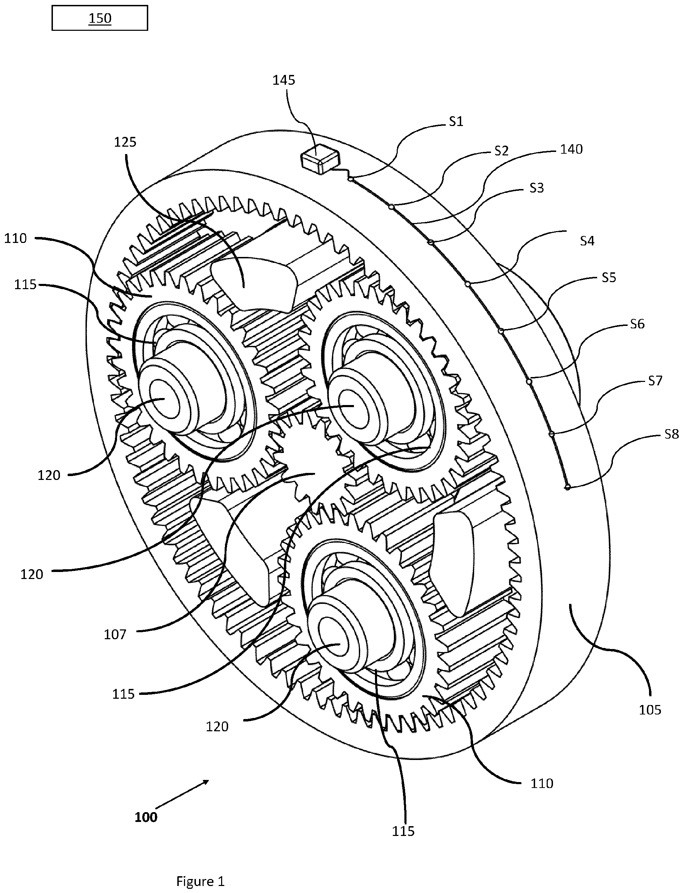

Figure 1 shows a cut perspective view of an example of a planetary gear system, which will be referred to as a planetary gearbox. The gearbox 100 comprises an outer ring gear 105, a sun gear 107 and three planet gears 110, each of which is rotationally supported on a corresponding planet shaft 120 by a corresponding radial bearing 115. The planet shafts are supported on a planet carrier 125, only part of which is visible in Fig. 1. Let us assume that the depicted gearbox 100 forms the first stage of a multistage indirect drive gearbox of a wind turbine. The planet carrier 125 is connected to the main shaft of the turbine, at a blade side of the gearbox. When rotation of the turbine blades drives the main shaft and the planet carrier, the planet gears rotate with the carrier 125 at a first speed, whereby the teeth of each planet gear engage with the teeth of the outer ring gear 105 and with the teeth of the sun gear 107. As is known, the sun gear is caused to rotate at a second speed, which is higher than the first, and the sun gear 107 is suitably coupled to a secondary stage, which may in turn be connected to a third stage for generating electricity.

For condition monitoring purposes, so that e.g. premature failure of a component may be detected, and more particularly, to enable the risk of failure to be predicted by monitoring the loads on the gearbox components, the planetary gearbox 100 is provided with a measurement and life estimation system according to the invention. The system comprises a number of sensors for obtaining field operational data relating to loading and speed of the gearbox components, and a processing unit 150, which receives the sensor signals and is configured to calculate the load on each gearbox component and the speed of the rotating components during operation at time intervals t.

In a preferred embodiment, as depicted in Fig. 1, the system comprises a plurality of strain sensing elements S1, S2, S3 ... S8 which are configured for attachment to an outer circumference of the outer ring gear 105 with a uniform spacing $\theta$.

When the teeth of each planet gear mesh with the teeth on the inner circumference of the ring gear, strains are induced on the outer circumference which are detected by the sensing elements. The use of strain gauges is possible, although the individual attachment and wiring of multiple gauges would be cumbersome and expensive. Also, accurate positioning and spacing of the individual sensors is more challenging. To overcome these drawbacks, a measuring system according to the invention preferably comprises at least one fibreoptic sensor (FOS) module 140, connected to an interrogator 145, whereby the sensing elements S1 - S8 are formed by fibre-Bragg gratings (FBGs).

The processing unit 150 receives a signal associated with each sensing element and, in a preferred embodiment, which will be explained in more detail later, is configured to derive a spatial strain distribution on the ring gear 105 from the measured strains. An input torque acting on the planet carrier 125 is then calculated from the spatial strain distribution, which also enables the speed of the planet carrier to be derived. The load on each gearbox component and the speed, or distance travelled / stress cycles experienced by each component, can then be calculated from the input torque, based on the known geometry of the gearbox.

In accordance with the invention, the operating conditions are measured and the processing unit 150 is configured to store the operating conditions history as a single indicator C(t) which reflects a used capacity for the gearbox as a whole. A remaining useable capacity and a corresponding remaining useable life can be estimated therefrom.

As is known, the fatigue life of gears and bearing follows a Weibull distribution, which is determined by a scale parameter A that reflects operating condition severity and a shape parameter k, which for bearings is 1.2 and is 2.5 for gears. The Weibull equation is expressed as:

$$\Pr \ (L > l) = S$$

$$\text{with } \log \ (1/S) = Al^k$$

Using a bearing as an example, L is the bearing life, typically expressed in millions of revolutions of the bearing, S is the survival probability for a given number of revolutions l and operating condition A.

Typically, A is calculated based on a probabilistic life $L_{10}$, which is the number of revolutions at which 10% of bearings in a population fail.

The L10 life for bearings is calculated as follows:

$$L10 = (Cr/P)^p,$$

where

C, is a basic dynamic load rating [N] specified by the bearing manufacturer
P is the load during operation [N]
p is an exponent (3 for ball bearings, 10/3 for roller bearings)

At the L10 life, $Pr(L > L10) = 0.9$

It therefore follows that

$$A^{\frac{1}{k}} = \ln\left(\frac{1}{0.9}\right)^{\frac{1}{k}} * \left(\frac{1}{L10}\right) = \ln\left(\frac{1}{0.9}\right)^{\frac{1}{k}} * \left(\frac{P}{Cr}\right)^p.$$

When a load measured during operation is substituted for P, a life distribution for the bearing is thus obtained, although is based on a constant operating severity. Gearbox components are subject to varying operating conditions, and in order to account for varying operating conditions, the reliability model is converted in terms of capacity.

Capacity C will be defined as: $C = A^{1/k}L$

Since A denotes the severity of operating conditions, C can be seen as the capacity of the bearing in that it lasted L revolutions under condition A.

A further term c is defined:

$c = A^{1/k} l$, which reflects a used capacity, i.e. a 'beating' or damage inflicted on the bearing during l revolutions under operating condition A.

The life model discussed above may be rewritten as:

$$Pr(L>l) = \exp(-Al^k)$$

Since A is positive, it follows that

$$Pr(A^{1/k} L > A^{1/k} l) = \exp(-Al^k).$$

Therefore, the life model can be expressed in terms of capacity as:

$$Pr(C > c) = \exp(-c^k)$$

The distribution of C depends on c only, and not on A and l separately, which forms the basis for incorporating non-constant operating conditions.

Let us assume that the bearing operates for $L_1$ revolutions under condition $A_1$, for $L_2$ revolutions under condition $A_2$, for $L_3$ revolutions under condition $A_3$, and for $L_4$ revolutions under condition $A_4$.

$$C = A_1^{\frac{1}{k}}L_1 + A_2^{\frac{1}{k}}L_2 + A_3^{\frac{1}{k}}L_3 + A_4^{\frac{1}{k}}L_4$$

Capacity accumulates as

Thus, a used capacity C(t) for the bearing may be calculated during operation of the gearbox, whereby for each time interval t, the processing unit 150 is configured to determine the scale parameter A of the Weibull distribution based on the $L_{10}$ life, which is determined based on the load calculated for the bearing during that interval using the sensor data. An associated operating condition severity $A^{1/k}$ is obtained and the used capacity is calculated by summing the obtained operating severity condition multiplied by the number of revolutions, or distance travelled, as calculated during each time interval.

Preferably, the distance travelled by each component $L_i$ is expressed as a distance travelled by a reference component, which may be the planet carrier 125 or any of the gears or bearings, and the probabilistic life ($L_{10}$ life) that is calculated for each gear and bearing is translated in terms of the distance travelled by the reference component, based on gearbox geometry. In a preferred example, the reference component is the planet carrier 125 and distance travelled by each gear and bearing during a time interval t is the number of revolutions of the planet carrier and the probabilistic life is translated into number of revolutions of the planet carrier.

The processing unit is configured to calculate a used capacity C(t) for each bearing, for each planet gear, for the sun gear and for the ring gear.

For gears, the $L_{10}$ life is also derived from the measured load and a load rating that may be calculated based on the gear geometry. For example, the number of stress cycles that a single tooth of the sun gear can endure with 90% reliability is given by:

$$I_{ts10} = (C_{ts}/F_t)^{Pg}$$

where $C_{ts}$ is a rated tooth capacity, $F_t$ is tangential tooth load which may be derived from the sensor data and gear geometry, and Pg is an exponent for the sun gear.

The $L_{10}$ life for the sun gear as a whole may be computed from the survival probability or reliability $S_S$ of the sun gear, which is obtained as the product of the teeth reliabilities: $S_S = S^{Ns}$, with Ns the number of sun gear teeth.

Determining the used capacity for each component enables two questions to be answered:

1. Based on the used capacity C(t) and a given confidence level $\alpha$, how much remaining capacity can the component exhibit with the given level of confidence?

2. Based on the used capacity C(t) and a desired remaining capacity c', what is the probability that the component can exhibit c' more capacity? This is relevant for determining mission risk.

The reliability model:

$$\Pr(C > c) = S \text{ with } \log(1/S) = c^k , \text{ i.e. } S = \exp(-c^k)$$

may also be expressed in terms of failure $F_l$:

$$F_l = Pr(C \leq c) = 1 - \exp(-c^k),$$

with $S = 1 - F_l$

The probability of remaining capacity c' after having exhibited an evidenced used capacity c~ may be described as follows:

$$Pr(C \leq \tilde{c} + c' | C > \tilde{c}) = 1 - \alpha$$

$$\text{which leads to } \frac{\Pr(\tilde{c} < C \leq \tilde{c} + c')}{\Pr(C > \tilde{c})} = 1 - \alpha$$

$$\frac{Pr(C \leq \tilde{c} + c') - \Pr(C \leq \tilde{c})}{1 - \Pr(C > \tilde{c})} = 1 - \alpha$$

$$F_l = 1 - \exp(\tilde{c}^k - (c' + \tilde{c})^k) = 1 - \alpha$$

$$S = \exp(\tilde{c}^k - (c' + \tilde{c})^k) = \alpha$$

For a desired level of confidence $\alpha$, it follows that the remaining capacity c' may be determined according to:

$$c' = \sqrt[k]{\tilde{c}^k - \log(\alpha)} - \tilde{c}$$

Using the used capacity C(t) that is calculated after a time t, the remaining capacity is thus given by:

$$c' = \sqrt[k]{C(t)^k - \log(\alpha)} - C(t)$$

Typically, the desired level of confidence $\alpha$ is 0.9 and the remaining capacity may be seen as $c_{10}'$, being a remaining capacity at which 10% of a population can be expected to fail.

In order to determine remaining useable life L' of the component, the determined remaining used capacity c' is converted in terms of number of revolutions / distance travelled according to the following formula:

$$L' = c'/A_F^{1/k}$$

whereby $A_F^{1/k}$ is a future expected operating severity that is estimated based on the operating history. $A_F^{1/k}$ may be an average of all previously calculated values or may be a moving average that takes account of recent operating conditions or previous relevant periods, which are relevant in view of weather conditions during a particular season.

Assuming that the remaining life L' for a component is the $L_{10}$ life, i.e. $L_{10}$', the future operating condition severity can be estimated by looking at a relevant operating period $[t_1, t_2]$ in the past, using values for the used capacity $C(t_1)$ and $C(t_2)$ calculated during that period:

$$A_F^{1/k} = \frac{C(t2) - C(t1)}{t2 - t1} = \frac{c10'}{L10'^{~}}$$

The remaining useable life of the component may thus be calculated according to:

$$L_{10}' = \frac{C10'}{C(t1) - C(t2)} (t2 - t1)$$

The conditional probability of failure can also be used to determine the probability $\alpha$ that for a given used capacity $c^{~}$ the component can exhibit a certain remaining capacity c' according to:

$$\alpha = \exp(\tilde{c}^k - (c' + \tilde{c})^k)$$

The capacity c' needed for a period of time ahead $t_m$, i.e. the mission can also be derived from the relevant historic data of calculated used capacity C(t). The needed capacity c' for the mission $t_m$ may be predicted based on the used capacity calculated for a relevant operating period in the past $[t_1, t_2]$ as follows

$$\frac{C(t+tm) - C(t)}{t_m} = \frac{c'}{t_m} \approx \frac{C(t2) - C(t1)}{t2 - t1}$$

leading to

$$c' \approx \frac{C(t2) - C(t1)}{t2 - t1} t_m$$

For example, if it is assumed that operating condition severity has varied periodically during a time period $t_p$ of e.g. 12 months, a mission window $t_m$ of 6 months could be a suitable design choice for a gearbox of wind turbine, given the seasonality in wind speeds. The remaining useable capacity may then be estimated as:

$$c' \approx \frac{C(t - t_p + t_m) - C(t - t_p)(t1)}{t_m} t_m = C(t - t_p + t_m) - C(t - t_{p)}$$

Thus, remaining usable life and mission risk may be calculated for each gearbox component individually, based on the calculated used capacity today and a prediction into the future that uses the historical operating data. This enables e.g. the operator of a windfarm to plan reliability-based maintenance in an accurate manner.

According to the invention, the processing unit is configured to calculate a used capacity C(t) for the gearbox as a whole, so that a remaining life and mission risk estimate may be determined.

The reliability model discussed above is based on a Weibull distribution of the form

$$Pr(L>l) = S, \text{ with } \log(1/S) = Al^k$$

The survival probability $S_T$ for the gearbox is defined as the product of the survival probability for each of the gears and bearings, based on the rationale that the gearbox fails if one of the components fails.

The model cannot be rewritten in the same form for $S_T$, but as gearbox reliability closely resembles a Weibull distribution, it is possible to fit one.

$$S_T(L) = S_B^{\,b}(L) * S_P^{\,b}(L) * S_S(L) * S_R(L)$$

where

b is the number of planets
$S_B$, $S_P$, $S_S$, and $S_R$ respectively represent the survival probability for the bearings, planet gears, sun gear and ring gear after a certain distance travelled L, suitably a distance travelled by the reference component.

The used capacity of each bearing and gear $c_i$ has been calculated, based on a summation of $c_i = A_i^{1/k_i} L_i$, which enables the corresponding survival probability $S_i$ to be calculated according to:

$$S_i = \exp(-c_i^{\,k_i})$$

The individual survival probabilities $S_i$ may be calculated for different values of L in order to obtain a plurality of values for $S_T$ and a Weibull curve is fitted through the points. Suitably, the calculated values for $S_T$ lie between 0.5 and 0.95, as this is the range of most interest. The shape parameter k and scale parameter A may be obtained from a least-squares solution, which allows an operating condition severity $A_s^{\,1/ks}$ to be calculated for the gearbox.

The used capacity for the gearbox may be calculated by summing the product of the operating condition severity and distance travelled under that condition during each time interval.

In accordance with the invention, the used capacity for the gearbox is calculated based on the used capacity $C_i$ that has been determined for each gear 105, 107, 110 and each bearing 115, according to the following model:

$$C_s^{\,k_s} \approx \sum C_i^{\,k_i}$$

where $C_s$ is the used capacity of the system, i.e. the gearbox, and $k_s$ is the shape parameter of the associated Weibull life distribution.

$$A_s L^{k_s} \approx \sum C_i^{\,k_i}$$

Therefore,

By using different values of L, the equation can be solved for $A_s$ - the scale parameter of the associated Weibull distribution - and $k_s$ using a least squares method.

The used capacity of the system may then be computed as:

$$C_s = \left(\sum C_i^{\,k_i}\right)^{1/ks}$$

A dataset of used capacity values calculated at different values of L is therefore needed. Initially, before an operating history has been generated, these values may be obtained from modelling and simulation. Once an operating history has been obtained, $k_s$ may be derived from a selection of 'measured' used capacity values obtained at different time intervals for different values of accumulated distance travelled L.

By determining the used capacity of the gearbox, remaining capacity, remaining useful life and mission risk may be calculated as described above for a single component.

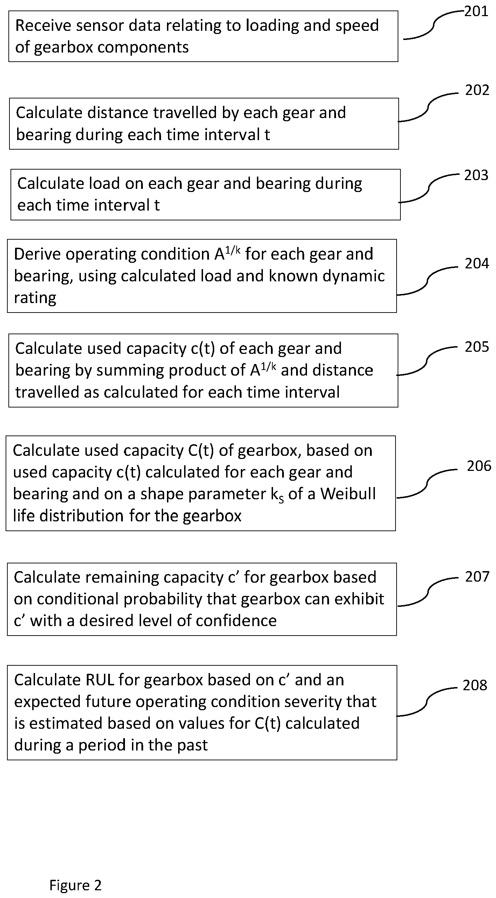

An inventive method of determining remaining useful life of a planetary gearbox is thus defined, steps of which are shown in Figure 2.

In a first step 201, the processing unit 150 receives sensor data relating to loading and speed of the gearbox components from the sensors S1 ... S8 of the measurement and life estimation system, during a series of time intervals t.

In a second step 202, a distance travelled $L_i$ during each time interval by each gear 105, 107, 110 and bearing 115 is calculated based on the received sensor signals. The distance travelled may be a number of revolutions or a number of stress cycles. Preferably, the method comprises calculating a distance travelled by a reference component, based on the sensor signals. The reference component may be the planet carrier 125 and the number of revolutions of the sun gear 107 and planet gears 110 is derived using the known gearbox geometry. The stress cycles experienced by the outer ring gear 105 may also be derived.

In a third step 203, the load on each gear and bearing during each time interval is calculated based on the sensor signals. As mentioned, the torque on the planet carrier 125 is preferably derived from the sensor data and the loads on the gears and bearings are calculated therefrom.

In a fourth step 204, an operating condition severity $A_i^{1/k_i}$ is obtained for each gear and bearing, whereby $k_i$ is a known shape parameter of an associated Weibull distribution and $A_i$ is a scale parameter of the distribution. $A_i$ is derived from a probabilistic life, preferably the $L_{10}$ life of each gear and bearing, which is calculated based on the load measured in step 203 and a known basic rating for the component in question.

In a fifth step 205, the used capacity $c(t)$ of each bearing and each gear is calculated, based on $c_i = A_i^{1/k_i} L_i$, by summing the operating condition severity $A_i^{1/k_i}$ obtained for each time interval in step 204 multiplied by the distance travelled $L_i$ as calculated in step 203 for each time interval.

In a sixth step 206, the used capacity of the gearbox $C(t)$ is calculated based on the used capacity $c(t)$ calculated for each gear and bearing in step 205 and on a shape parameter $k_s$ of a Weibull life distribution for the gearbox. As explained above, the shape parameter may be derived in advance based on modelling and simulation or may be derived from calculated values of $c(t)$ obtained at different values of distance travelled.

In a seventh step 207, a remaining used useable capacity c' for the gearbox is calculated based on a conditional probability that the gearbox can exhibit c' in addition to the evidenced used capacity $C(t)$ with a desired level of confidence $\alpha$, according to:

$$c' = \sqrt[ks]{C(t)^k - \log(\alpha) - C(t)}$$

In an eight step, a remaining useable life L' is calculated for the gearbox based on c' and an expected future operating condition severity that is estimated based on values for $C(t)$ calculated during a period of interest in the past.

In a preferred embodiment, the remaining useable life L' is expressed in terms of a number of revolutions of the planet carrier 125, i.e. the distance travelled by the reference component.

The second step 202 of the method then suitably comprises calculating the distance travelled by the planet carrier and the distance travelled by each gear and bearing $L_i$ is expressed as the number of revolutions of the planet carrier.

The fifth step 205 of calculating the used capacity $c(t)$ of each gear and bearing then comprises translating the used capacity with reference to the number of carrier revolutions.

For example, the $L_{10}$ life of a bearing $L_{B10}$ may be translated into a corresponding reference life $L_{R10}$ expressed in millions of carrier revolutions according to:

$$L_{R10} = L_{B10}/\beta,$$

where $\beta$ is the known carrier to planet transmission ratio.

The used capacity for the bearing is then computed as

$$C = A^{1/k} L = \log (1/0.9)^{1/k} * (L/L_{r10})$$

where L relates to the number of carrier revolutions.

A similar translation is suitably performed for each gear 105, 107, 110. It should be noted that the calculated used capacity for each component is invariant of the applicable transmission ratio.

Estimating the remaining useable life of the gearbox based on the calculated used capacity of each gear and bearing has several advantages, in addition to an accurate estimation that takes variable operating conditions into account. Taking a wind turbine farm as an example, a Weibull distribution may be constructed for each gearbox component under variable operating conditions by counting the number of failures at the associated level of used capacity. The observed failure distribution can be compared with the predicted failure behaviour. In this way, failure prediction can be improved by updating the modelled failure distribution, which is a valuable input for a reliability-based maintenance strategy.

Furthermore, the capacity-based method enables refurbishment or replacement of components to be taken into account. For example, bearings typically fail sooner than gears. If the bearings are replaced, the used capacity for these components is set to zero and the used capacity for the gearbox as a whole is reduced accordingly.

In a further development, the accuracy of the calculation of used capacity is improved by taking into account other factors that affect the operating condition severity for the gearbox components.

The system preferably includes at least one temperature sensor. The measured temperature is indicative of oil temperature and thus of lubrication condition. The L10 life that is calculated for each component may thus be adjusted with a life modification factor $a_L$ that is based on lubrication condition.

Again using a bearing as an example, $L_{B10}$ may be calculated as:

$$L_{B10} = a_L * (P/C_r)^p$$

The lubrication-based life modification factor may be determined based on measured temperature only, or may further include an estimation of the cleanliness of the oil.

A further factor that influences operating condition severity is unequal load sharing. Ideally, each planet gear should share an equal percentage of the load. If one of the planets is taking up more load than the others, its survival probability decreases.

In a still further development, a load-sharing factor $K_y$ for the planet gears is determined from the measured strains. In one example, $K_y$ is used as a life modification factor that adjusts the calculated $L_{10}$ life according to $L_{10} = K_y * (P/C_r)^p$. In a preferred example, the loads calculated in step 203 for each component are adjusted based on the load-sharing factor $K_y$.

Most significantly, the accuracy of determining operating condition severity is dependent on the accuracy of the calculation of the component loading based on the sensor data. As mentioned above, the system of the invention is preferably configured to measure a spatial strain distribution around the outer ring gear 105, so as to derive the payload (input torque) acting on the planet carrier 125. A preferred method of deriving the payload is largely based on a method as described in GB2582597.

Starting from an array of sensor positions (angles θ) around the circumference of the gear ring: $\theta = [\theta_1 \, \theta_2 \, .. \theta_n]$

For uniformly distributed sensors around the circumference, this becomes

$$\boldsymbol{\theta} = [1\theta.\, 2\theta, .., n\theta] \text{ with } \theta = \theta_j - \theta_i \, j \neq i$$

The phase shift or phase difference Φ between the signal from a sensor $s_i$ and a sensor $s_j$ depends on the angular spacing θ of the sensing elements relative to the number b of evenly spaced planets, which are known parameters, meaning that the phase shift can be calculated as follows:

$$\Phi = (\boldsymbol{\theta}.b)$$

The sensor signals s1, s2 .... sn associated with each sensing element are assumed to provide unknown periodic (strain) signals, so can be mathematically described by a linear combination of (unknown) basis functions [sinα cosα] with known phase shift Φ, where $\alpha = 2.\pi.f.t$ where f is the basic frequency associated with the signature and t is time, as an example f=PPF (planet passing frequency), the PPF measured at the outer ring in this example. PPF will be used to refer to this frequency throughout the description.

In matrix notation, the signals for the n uniformly distributed sensors can be expressed as:

$$[s_1 s_2 .. s_n] = [\sin\alpha \quad \cos\alpha].\begin{bmatrix} \cos 1\Phi & \cos 2\Phi & ... & \cos n\Phi \\ \sin 1\Phi & \sin 2\Phi & ... & \sin n\Phi \end{bmatrix}$$

The analogue sensing elements provide continuous signals s1(t), s2(t) .... sn(t) or, more generally, si(t). The values si[m.Ts] are obtained from si(t) by 'sampling' at a sampling rate fs=1/Ts, whereby Ts is the sampling interval. These discrete sensor observations can be stacked as follows

$$S(t) = \begin{bmatrix} s_1[m] & s_2[m] & ... & s_n[m] \\ s_1[m - T_s] & s_2[m - T_s] & ... & s_n[m - T_s] \\ s_1[m - 2T_s] & s_2[m - 2T_s] & ... & s_n[m - 2T_s] \\ s_1[m - 3T_s] & s_2[m - 3T_s] & ... & s_n[m - 3T_s] \\ ... & ... & ... & ... \end{bmatrix}$$

It is assumed that each sensor signal $s_i$ (in the columns of matrix S) can be represented as a linear combination of the unknown time basis functions, so that a matrix P can be defined which has columns corresponding to the unknown basis function. i.e.

$$P(t) = [sin\alpha \quad cos\alpha]$$

whereby P represents the case where the sensor signals are influenced only by the strain-induced planet passes.

The strain-induced planet passes fully reflect the load of interest, i.e. the payload, in this case, and a signature matrix A can be derived, which defines how the basis functions [$sin\alpha$ $cos\alpha$] are linearly combined to describe the measurements $s_1, ... , s_n$ in the measurement matrix S, whereby:

$$S = P*A_p$$

$$A_p = [a_1 \ a_2 \ ... \ a_n] \text{ and } a_i = \begin{bmatrix} \sin(b.\Phi) \\ \cos(b.\Phi) \end{bmatrix}$$

The signatures defined in the matrix $A_p$ may be derived from a physical model based on first principles or from measurements under known load and operating conditions, whereby the coefficients of the matrix $a_i$ capture the known phase shift $\Phi$. In an advantageous further development, which will be described later, the dominant signatures in the $A_p$ matrix are derived from the sensor data.

In practice of course, the measured strains are further influenced by disturbance loads and forces associated with e.g. gear defects, bearing defects and geometrical variations. These disturbance loads will be referred to as pain loads, as they are produced under non-optimal operating conditions that adversely affect the life of the gearbox.

In the more general case, the sensor signals can be described by

$$S(t) = P(t).A + Q(t).B + noise(t) \qquad \text{[Eq. 1]},$$

B is a signature matrix containing known information on the pain load signatures, which may be derived via modelling and testing. Q is a matrix containing the time basis functions associated with the time periodic pain loads. The term Q*B represents the component of the strain sensor signal S that is related to the pain load.

The objective is to recover the time basis functions P(t) related to the payload from the sensor signals S(t) that have a known contribution from the pain load Q(t) as well. A further objective could be to recover the payload as well as the pain load of interest. In that case, the Q and B matrices may be partitioned into Q=[Q1 Q2] and B=[B1; B2] such that:

$$S=P1*A1+Q2*B2 \qquad \text{[Eq.2]}$$

with P1=[P Q1] and A1=[A;B1];

As can be seen from Eq. 2 this is just a special case of Eq. 1.

The basis functions may be derived according to:

$$P = S \cdot B_0 \cdot pinv(A \cdot B_0),$$

with $B_0$ in the nullspace of $B$ such that

$$B \cdot B_0 = 0.$$

In the trivial case that $B = 0$, i.e.

$$S(t) = P(t).A + noise(t),$$

this implies that $B_0 = I$ and

$$P = S.pinv(A).$$

The torque on the planet carrier and its speed can be derived from the strain basis functions in P.

The spatial harmonic strain distribution on the circumference of the outer ring gear due to the torque applied on the planet carrier is directly related to the number of planets. Therefore, a gearbox with 3 planets such as shown in Fig. 1 leaves a 3rd spatial harmonic signature (and super harmonics, i.e. 6th, 9th etc.) on the outer ring 105. The time periodic strain basis functions associated with the signatures related to planet passings are directly associated with the payload on the gearbox. In other words, the measured strains are influenced by the payload, which exhibits a payload signature that is observable at the planet passing frequency (PPF).

The measured strains are further influenced by the pain loads, which exhibit a pain load signature that is observable at a different characteristic frequency, which will be referred to as the shaft frequency (SF). The shaft in question is the shaft to which the planet carrier 125 is connected.

The $0^{th}$ harmonic of the shaft frequency is typically related to uniform strain profiles as a result of global temperature changes or uniform load cases. The $1^{st}$ and $2^{nd}$ spatial harmonic are often related to unbalance, misalignment, geometric imperfections and other phenomena that induce radial load patterns.

The observed signatures associated with the pain loads should not interfere with the signatures related to the payload and vice versa, so that at least the payload can be recovered from the sensor signals. Preferably, the payload and the pain load are independently recoverable. This is achieved in accordance with the invention via appropriate selection of the number and distribution of the strain sensing elements.

Based on the teachings of GB2582597, the number of uniformly spaced sensors is preferably chosen from the set of prime numbers or is at least coprime with respect to the number of planet gears b. That means the greatest common divider between the number of sensors n and the number of planets b equals 1. In this case the harmonic components are more likely to be better observed independently.

As a preferred design constraint, it is imposed that the 1st and 2nd harmonic of the shaft frequency do not interfere with the planet passing frequency or its relevant nr of higher harmonics (2nd, 3rd or also 4th and 5th harmonic).

Furthermore, based on the knowledge that higher harmonics of the PPF time basis functions that relate to the higher harmonics of the spatial planet passing signature will be available in the periodic content of the sensor signals, the aim is to avoid that these higher harmonic spatial PP signatures ($2^{nd}$, $3^{rd}$ or also $4^{th}$ and $5^{th}$ harmonic of the PP) are aliased and cannot be distinguished from pain loads and related signatures,

It may be further imposed that the higher harmonic signatures related to the higher harmonics of the PPF that relate to the payload do not interfere with the pain loads to be recovered, i.e. the $0^{th}$, $1^{st}$ and $2^{nd}$ harmonic spatial frequency.

Simulations may be performed based on varying numbers of n sensors uniformly distributed around the circumference, in order to determine which harmonics are observed, so as to check if the design constraints are satisfied. A minimum number of sensors could then be selected for a particular gearbox.

However, it would be preferable if the number and associated sensor distribution could be used on gearboxes having approximately the same outer diameter, but different numbers of planets.

Simulations were performed based on n = {11, 13, 17, 19, 23, 29, 31, 37, 41, 43, 47, 53, 59} for planetary gearboxes with 3 up to 9 planets, i.e. b={3,4,5,6,7,8,9} in order to identify sensor configurations with a minimum number of sensors uniformly distributed on the circumference such that the pain loads that relate to the $0^{th}$, $1^{st}$ and $2^{nd}$ harmonic signatures around the circumference of the outer ring can be recovered independent from the higher harmonics spatial content induced by the planet passings.

The results of a simulation performed for a gearbox with 3 planets and different numbers of sensors are shown in the table below. The values in the table represent the harmonic profile that is observed at the $(k*b)^{th}$ harmonic, with k = {1, 2, 3, 4, 5}.

| b=3, n={11,13,..,41} | 11 | 13 | 17 | 1.3 | 23 | 29 | 31 | 37 | 41 |
|---|---|---|---|---|---|---|---|---|---|
| k=1, k*b=3 | 3 | 3 | 3 | 3 | 3 | 3 | 3 | 3 | 3 |
| k=2, k*b=6 | 5 | 6 | 6 | 6 | 6 | 6 | 6 | 6 | 6 |
| k=3, k*b=9 | 2 | 4 | 8 | 9 | 9 | 9 | 9 | 9 | 9 |
| k=4, k*b=12 | 1 | 1 | 5 | 7 | 11 | 12 | 12 | 12 | 12 |
| k=5, k*b=15 | 4 | 2 | 2 | 4 | 8 | 14 | 15 | 15 | 15 |

When it is specified that there must be no interference for values of k up to 5, the minimum number of sensors at which the requirements are met is 19 sensors. With 17 sensors, the 15th harmonic induces a 2nd harmonic profile and as such, the 2nd order harmonic cannot be recovered with confidence because we know that the 5th harmonic is present due to the planet passing.

The analysis was repeated for systems with up to 9 planet gears using first and second specifications. In the first specification, it is imposed that the k = {1, 2} term can be recovered from the sensor data and that the $(b*k)^{th}$ harmonic is observable without interference for values of k up to 5. In the second specification, which is somewhat less strict than the first, it is imposed that the k = {1} term can be recovered from the sensor data and that the $(b*k)^{th}$ harmonic is observable without interference for values of k up to 4. In the example shown in the table above, the requirements of the $2^{nd}$

specification are satisfied with 17 uniformly distributed sensors.

It was found that with 37 sensors uniformly distributed on the outer ring, the requirements of the 1st specification are satisfied for all planetary gearboxes with up to 9 planets; and that with 29 sensors uniformly distributed on the outer ring, the requirements of the 2nd specification are satisfied for all planetary gearboxes with up to 9 planets. The aforementioned configurations or subsets of these sensor configurations are preferred for monitoring driveline applications from the outer ring of the planetary gear.

In some embodiments, the measurement and life estimation system of the invention comprises 29 or 37 sensors arranged at evenly spaced intervals $\theta$ around the circumference of the outer ring gear. In the case of a gearbox where the outer ring has a diameter of approx. 2m, the system may comprise a sensing fibre with Bragg gratings arranged at intervals of around 21.5 cm (29 sensors) or 17 cm (37 sensors), so that the system may be standardized for different numbers of planet gears. To cover the entire circumference, 4 or 5 FOS modules are preferably joined together.

As a minimum, the sensing fibre should cover at least 90 spatial degrees of the most dominant PP signature: the "planet passing spatial frequency", i.e. 90 degrees/b. In the case of 3 planet gears and an outer ring gear of diameter $\approx$ 2m, a single FOS module with a fibre length of $\approx$ 51 cm and e.g. 4 Bragg gratings spaced at 17 cm intervals is sufficient to derive the payload from the sensor signals. At least 2 sensors with a suitably selected spacing are needed, although more sensors generally improve accuracy. In preferred embodiments, the FOS module comprises at least 5 Bragg gratings arranged with a uniform spacing that satisfies the requirements of either the 1st or 2nd specification for the sensor configuration as described above. As will be understood, the spatial coverage may also be greater than 90degrees/b, e.g. 120 degrees/b.

It has been found that for gearboxes with 3 - 9 planet gears, configurations with a sensor spacing based on 360 degrees divided by 23, 29, 31 or 37 enables a range of gearboxes to be covered, and that configurations with a sensor spacing based on 360 degrees divided by any prime number between 17 and 37 can be a suitable choice for a specific planetary gearbox.

Tests have shown that also when the system comprises e.g. 37 sensors uniformly distributed around the entire circumference, a selection of 5 sensors from the population is sufficient to derive the payload with acceptable accuracy. For practical reasons, it can be preferable to select 5 adjacent Braag gratings that are accommodated on the same FOS module.

There is also a practical constraint on the number of sensors (Bragg gratings) that can be integrated in the same fibre, due to current limitations in available wavelength budget. Preferably, a sensing fibre (FOS module) comprises no more than 8 FBGs, such as shown in the example of Figure 1. A greater number is possible, although requires a more sophisticated and thus expensive interrogator 145.

In the example of Fig. 1, the sensing elements are evenly distributed with a spacing of 360 degrees/31. As may be seen from the table above, 31 evenly distributed sensors satisfies the stricter requirements of the 1st specification for a gearbox with 3 planets. In a further embodiment, the measuring system comprises four such FOS modules, affixed around the full circumference of the ring gear 105. This enables 31 equidistant strain measurement positions and one overlapping sensing element. Suitably, the one overlapping sensing element is not affixed to the outer circumference and is used a temperature sensor. The resulting temperature signal may be used to estimate a lubrication life modification factor as described above.

In a further embodiment, five identical fibers with 7 sensors each are affixed to the outer circumference of the ring gear 105, such that there are 31 equidistant strain measurement positions and 4 overlapping measurements. These overlapping measurement points may be used as temperature sensors if not bonded to the gearbox surface.

The one or more sensing fibers may be fixed directly to the outer circumference of the ring gear 105, whereby the outer circumference is preferably provided with a groove for accommodating the fiber. Suitably, the fiber is glued to the groove at the FBG strain sensing locations.

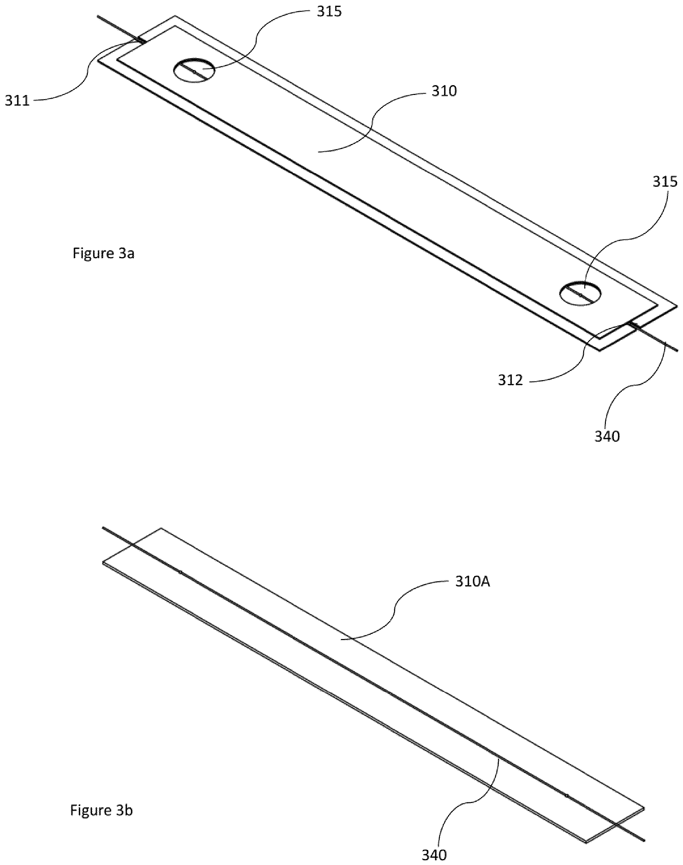

In an advantageous further development, the fiber is fixed to a strip, such as shown in Fig. 3a. The strip 310 is made from a flexible material such as metal sheet. Preferably, the fiber 340 is accommodated in a groove in the strip which has a depth that is somewhat greater than the fiber diameter. The fiber 340 is attached to the strip only at a start point 311 and an end point 312, in longitudinal direction of the strip (corresponding to a circumferential direction on the outer ring gear). To facilitate direct attachment of the sensing elements onto the outer circumference of the ring gear 105, the strip 310 is provided with holes 315 at the location of the FBGs. When the strip has been placed on the outer circumference of the ring gear, possibly in a dedicated groove in the circumference as described above, the fiber 340 is e.g. glued in place at the strain sensing locations via the holes 315. After fixation to the outer circumference, the fiber can be detached from the strip and the strip may be removed. Alternatively, the strip can be left in place and then acts as a protective cover for the sensing fiber 340.

In a further embodiment, as depicted in a Fig. 3b, the fiber 340 is provided on a strip 310A of thin metal sheet with a thickness of less than 1 mm, e.g. 0.1 - 0.2 mm. The fiber is fixed to the strip at the FBG locations and the strip 310A is attached to the outer circumference of the ring gear 105 via e.g. welding or brazing or via adhesive bonding. In this embodiment, the strain on the ring gear outer circumference is transferred to the sheet metal strip 310A and then to the fiber 340. The fiber may also be provided on a somewhat thicker strip or substrate, e.g. 0.8 - 1.0 mm, such that when the substrate is bent to conform the curvature of the outer ring gear 105, the fiber is pretensioned.

Providing the fiber on a strip protects the fiber during storage and transportation and the strip may further act as a cover after mounting and as a sensor positioning device. Accurate positioning of the sensing elements is important, although in practice, there may be some uncertainty due to e.g. bonding issues. Furthermore, it can happen that the amplitude measured by a particular sensing element is position dependent, for example, when the outer ring gear has a non-uniform thickness and one or more sensing elements are located at a position of greater stiffness than other sensing elements.

The basic assumption for deriving the time basis functions P(t) that govern sensor readings in time S(t) is that S(t) = P(t)A(n,b), whereby static information is stored in signature matrix A(n,b) that defines how spatial deformation shapes associated with the planet passings are related to the time basis functions. As mentioned above, the planet passing-induced spatial strain signature A(n,b) can be determined in advance, based on modelling and testing. These will be referred to as model-based signatures.

In a further development, the A(n,b) signatures are computed from the sensor measurements S, without explicit computation of P, and will be referred to as data-based signatures. This has several advantages. The unknown contribution of unknown signatures may be determined from the sensor data rather than the unknown contribution of the known model-based signatures.

Furthermore, data-based signatures may be computed and compared over time, so as to reveal trends that impact the system performance. The underlying assumption for the model-based signatures is that if the system behaves under normal operation, these signatures will be static and as such not change over time. If however the data reveals that these signatures A(n,b) change over time, then this is an indicator of an unexpected change of the system and might indicate a premature failure or an unexpected change in operating condition, i.e. a detection system for the health of the system. The data-based signatures together with the time basis functions can be used to further diagnose the system.

A still further advantage is that by computing the data-based signatures at multiple time instances (recursively and real-time if needed), it can be revealed if the signatures exhibit position and time dependency.

The model assumes that the system can be described as S(t,pos)=P(t)A(t,pos)

$$\text{With } S(t) = \begin{bmatrix} s_1[m] & s_2[m] & \ldots & s_n[m] \\ s_1[m-T_s] & s_2[m-T_s] & \ldots & s_n[m-T_s] \\ s_1[m-2T_s] & s_2[m-2T_s] & \ldots & s_n[m-2T_s] \\ s_1[m-3T_s] & s_2[m-3T_s] & \ldots & s_n[m-3T_s] \\ \ldots & \ldots & \ldots & \ldots \end{bmatrix}$$

S(t) is a measurement matrix with in each column a time history of the individual sensor output for a time interval.

The transpose of matrix S is obtained S' and the data-based signatures are computed via cross correlation of sensor outputs over an interval, i.e.

$$S'S=A'P'PA$$

The result of the correlation S'S is an n times n matrix that can be interpreted as above, which is then decomposed to reveal A. This may be done using singular value decomposition or eigen vector/ eigen value decomposition.

It is assumed that P'P is a diagonal matrix and that the time basis functions P are orthogonal components. This may be verified via measurements and algorithms that recover P under normal operation with the model-based signatures.

Matrices [u, s, v] may be defined which represent the singular value decomposition of the correlation:

[u,s,v]=svd(S'S), and usv'=S'S=A'P'PA (since S'*S is non negative, the eigen value decomposition equals the svd) u=v=A' and s= P'P.

The singular value decomposition thus gives the signatures A (with normalized length by default, i.e. the unitary orthogonal basis u=v).

Furthermore, the singular value matrix s (a rectangular matrix with zeros on the non-diagonals and non-negative numbers on the main diagonal) gives the magnitude of the time basis functions P (diagonal entries in s).

In the case of a rotating force vector acting on the gear ring, the singular values and the corresponding signatures come in pairs. In this way a travelling wave (e.g. due to a forced spatially periodic excitation, a rotating force) in the structure is decomposed.

In case of a standing wave, that could have been caused by excitation of a natural eigen mode of the system (unforced vibration potentially only lightly damped), said wave can be described by a single signature and corresponding time basis function.

As mentioned, computing the data-based signatures reveals if the sensor signal strain levels are position dependent, which enhances the accuracy of the computation of the time basis functions.

In a further development, the processing unit is configured to derive a scaled matrix $A_{sc} = AK^{-1}$ from the data-based computation of signature matrix A, whereby K is a diagonal scaling matrix with gain factors that scales the amplitude of the individual sensors to include (position dependent) amplitude differences. The entries of K reflect the position dependent amplitudes of the sensors, which might have been caused by position dependent forces and/or stiffness variations.

The measurement matrix S can be expressed as S = MK, with M representing the scaled measurements. It therefore follows that:

$$K^T M^T M K = A^T P^T P A \text{ and } M^T M = K^{-T} A^T P^T P A K^{-1}$$

K scales the columns of A, and A(:,i) should have equal magnitude for all i if strain is uniform. An unequal magnitude is assumed to be due to a sensor-specific scaling factor, which may have been induced by the fixation properties onto the steel outer ring, i.e. glueing layer, or by non-uniformity in structural stiffness (as observed close to the torque arms of the ring gear, for example).

$A_{sc} = ApK^{-1}$ is directly recovered from the data while up front model knowledge is often restricted to A only. The scaling matrix K related to stiffness variations or position dependent forces on the planetary outer ring of the gearbox may also be derived from the data-based signature matrix.

In a still further development, the processing unit is configured to calibrate the torque that is calculated from the time basis functions P.

In one example, the associated method has a first step in which individual sensor gain differences are computed and related to each other using information from the data-based signatures. Based upon the relatively scaled sensors (with equalized gain factors), the relevant time-based basis functions are calculated, from which an unscaled torque signal is computed.

The sensor system measures strain at specific positions around the circumference of the outer ring gear. These strain values are translated in time basis functions P given the knowledge on the signature matrix A, which can be recovered from the sensor data or from model knowledge. The torque is recovered from the time basis functions P that are associated with the 1st and/or higher order spatial harmonic signatures in A related to the planet passings. The sensor signals can be relatively scaled with the data-based signatures $A_{sc}$ and model based knowledge A.

Recalling that $a_i = \begin{bmatrix} \sin(\text{i. b. } \Phi) \\ \cos(\text{i. b. } \Phi) \end{bmatrix}$ and $a_{sc_i} = k_i^{-1} \begin{bmatrix} \sin(\text{i. b. } \Phi) \\ \cos(\text{i. b. } \Phi) \end{bmatrix} = \begin{bmatrix} k_i^{-1} \sin(\text{i. b. } \Phi) \\ k_i^{-1} \cos(\text{i. b. } \Phi) \end{bmatrix}$ which follows

from $A_{sc} = AK^{-1}$. $|a_{sc_i}| = k_i^{-1}|a_i|$ with $|a_i| = \sqrt{\sin^2(ib\Phi) + \cos^2(ib\Phi)}$ and thus $|a_i| = |a_j| = |a|$. The model-based planet passing signature is position independent while the data-based planet passing signatures recover relative amplitude dependency, i.e. $k_i^{-1} = \dfrac{|a_{sc_i}|}{|a|}$

In one embodiment, the individual sensor signals are scaled with $k_i^{-1}$ before the time basis functions are computed from the model-based signatures. In another embodiment, the data-based signatures related to the planet passing frequency or its higher harmonics are directly used to compute the associated time basis function.

$P = SA_{sc}^T(A_{sc}A_{sc}^T)^{-1}$ with $A_{sc}^T(A_{sc}A_{sc}^T)^{-1}$ the pseudo inverse of $A_{sc}$, i.e. pinv($A_{sc}$) resulting in an unscaled torque:

$$T_u(t) = \sqrt{p_1^2(t) + p_2^2(t)} \text{ with } P = [p_1(t) \quad p_2(t)]$$

In a second step, the unscaled torque $T_u(t)$ is calibrated with a calibration gain that is derived or initialised from a reference measurement with a reference torque measurement system (e.g. determined on a test rig or in the application), or from prior knowledge (based upon similar applications) and predictive modelling/simulation results.

$T_c(t) = cT_u(t)$ with c a calibration factor that relates the uncalibrated measurement with the calibrated torque measurement $T_c$.

In a preferred embodiment, the unscaled torque is calibrated based upon operational data. Force is calibrated as fraction or percentage of "rated torque" at "rated speed" and the magnitude of the time basis function is scaled to reflect the "rated torque" condition. We know that "rated power" is achieved under designed rated speed and torque condition. The calibration procedure is based upon detected rated torque/speed clipping events in real operation. This method can be repeated at several time instances to check the validity of the calibration factor or to find a statistically relevant and/or calibration optimized value for c. These operating conditions (rated torque/speed) can be easily detected from the data since speed can be computed from the time basis functions without additional calibration.

Furthermore the rated speed is known in advance i.e.

$$phi_{planet_{wrap}}(t) = atan2\big(p_1(t), p_2(t)\big) \qquad [rad]$$

$$phi_{low\ speed\ shaft_{unwrap}} = \frac{unwrap\left(phi_{planet_{wrap}}\right)}{b.i} \qquad [rad]$$

This gives the low speed shaft angle of the planetary gearbox, the low-speed shaft being the shaft that is connected to the planet carrier, with b the number of planets and i the i-th harmonic of the planet passing signature A to compute P.

Calculating the speed follows from

$$Speed_{low_{speed_{shaft}}} = \frac{diff\left(phi_{low\ speed\ shaft_{unwrap}}\right)}{T_{sample_{rate}}.2.pi}.60 \quad [RPM]$$

by taking the maximum of $T_u(t)$ for all time instances in a relevant period at which the measured $Speed_{low_{speed_{shaft}}}$ equals the known rated speed. If the rated speed is not known upfront, then the maximum of $T_u(t)$ for all time instances in a relevant period at which the measured $Speed_{low_{speed_{shaft}}}$ is maximum can be considered the rated torque and can be used to calibrate the torque (at 100%).

**Determination of load sharing factor**

Load sharing factor $K_\gamma$ accounts for the maldistribution of load in multiple path transmissions (dual tandem, epicyclic, double helix, etc.). $K_\gamma$ is defined as the ratio between the maximum load through an actual path and the evenly shared load. The factor mainly depends on accuracy and flexibility of the branches. The load sharing factor $K_\gamma$ may be determined by measurements or by system analysis. Where a value determined in such a way cannot be supplied, the following values can be considered for epicyclic gears: - up to 3 planetary gears : 1.00 - 4 planetary gears : 1.20 - 5 planetary gears : 1.30 - 6 planetary gears and over: 1.40 An arrangement of sensors according to the previously described embodiments delivers a real time accurate load sharing measurement to reliably operate an epicyclic gearset within its (torque) capacity. By measuring and assuring that the gearbox torque and load sharing safety limits are respected during all operation conditions, it becomes possible to push the limits of sustainable (reliable and economically viable) rotation. Several advantages are obtained:

1) Measurement of the load sharing in the design (validation) and testing phase allows for actionable insights that lead to design improvements to further optimize load sharing. This is specifically important given the trend to increase torque density and to reduce costs by increasing the number of planets in a planetary gearbox. Since the mesh load factor is directly used for gear rating and sizing, a lower value allows a more optimized gearbox design, which leads to a significant improvement in torque density, reliability and cost.

2) By measuring the real time load sharing factor (and the applied torque) during operation, the gearbox owner will effectively benefit from a potentially 20% increase in available torque density in case of 4-planetary gears. In case of 5 or 6 and more planetary gears the increase in available torque density will be respectively 30% or 40%. This assumes the load is shared within a few percent 2-5% at maximal load and the real time evidence comes from the sensor arrangement. A gearbox with a sensor arrangement in accordance with the invention can cover an extended nominal torque range. By taking the guesswork out of the equation by measuring the load sharing factor, $K_\gamma$, the available torque density of the planetary gearbox can be increased by up to 40%.

3) The Real time load sharing factor acts as a degradation variable, i.e. is a condition monitoring signal and a trend towards increased load sharing imperfection is an early indicator of potential failure. As an example, the real time load sharing factor is negatively impacted as planet bearing faults are developed. This makes detection of early failures possible and reduces unplanned downtime.

Furthermore, since load sharing improves at higher torque levels and a sensor arrangement in accordance with the invention is able to measure both load sharing and torque real time, the load sharing at x% torque levels can be monitored to obtain a more accurate degradation trend for condition monitoring purposes.

Load sharing can be evaluated at each sensor position. For this reason, it can be beneficial to measure spatially around the circumference of the outer ring gear 105 to find interesting positions (i.e. extremes) in load sharing. Load sharing under high load conditions contributes to the used capacity of the gearbox. For monitoring purposes, it is of interest to have a dashboard that shows a trend in load sharing at similar load levels. In this case degradation can be better observed.

Thus, in a further development, the processing unit 150 is further configured to calculate the load sharing factor $K_\gamma$ obtained at a certain load level over time, and to monitor changes in the calculated values as a degradation variable for early detection of bearing faults, unbalance etc.

In addition, as explained previously, the load sharing factor $K_\gamma$ can be used to more accurately calculate the used capacity of the gearbox, which in turn provides a better estimation for remaining useful life and mission risk.

In a first embodiment, $K_\gamma$ is computed for each sensor location (n locations) by comparing the planet passing strain levels of all the b planets with each other. This measurement is updated for each planet passing. The result is n * $K_\gamma$ values that are consolidated into a single $K_\gamma$ metric by means of averaging.

In a second embodiment, the $K_\gamma$ values are estimated for each time instant by tracking of each planet location and by estimating the strain level for every time instant at the planet location by using the measurement of a subset of sensors surrounding the planet ($S_{surrounding}(t)$). A virtual sensor is defined for all planet locations and the estimated strains are compared and used to compute $K_\gamma$. With this approach, for all time instants $K\gamma$ can be computed by using strain levels at exactly the same time instants. This means that, contrary to the first embodiment, a change in operating condition between planet passings does not have a negative effect on the accuracy/validity of the $K_\gamma$ computation method. This second method requires more sensors distributed on the circumference than planets, i.e. n>b, while the first method requires only one sensor. With more sensors distributed on the circumference of the planetary ring gear 105, a more detailed and accurate $K_\gamma$ value can be constructed, i.e. $K\gamma$ variation as a function of ring gear position and/or planet position. The virtual sensors readings (needed for the second embodiment) at the planet locations are constructed as follows.

In a first step, the planet locations are determined from the time basis functions P, i.e. the planet is at the location where the sensor attains its maximum value. This holds for all sensors.

$$phi_{planet,i} = \frac{unwrap\left(phi_{planet_{wrap}}\right)}{b} + \rho + i.2.\frac{pi}{b}$$

, [rad], with i an integer from {0,...,b-1} and $\rho$ a fixed angle offset that is determined upfront.

$$P_{surrounding,i} = S_{surrounding,i} \cdot pinv(A_{surrounding,i})$$

$S_{virtual,i}(t) = P_{surrounding,i}(t) \cdot A_{virtual,i}$, where $A_{virtual,i} = A_{virtual,i}(phi_{planet,i})$

With these virtual sensors $S_{virtual,i}(t)$ at the planet positions $phi_{planet,i}(t)$, $K_\gamma$ can be computed at each time instant t.

**Claims**

1. A method of estimating life of a planetary gearbox (100) having gearbox components which include an outer ring gear (105), a sun gear (107) and a number (b) of planet gears (110) supported on a planet carrier (125) via a corresponding number of bearings (115), the method comprising steps of:

   i) receiving sensors signals relating to loading and speed of said gearbox components during a series of time intervals t;
   and for each time interval t
   ii) calculating a distance travelled $L_i$ by each gear (105, 107, 110) and each bearing (115), based on the received sensor signals and on gearbox geometry, whereby distance travelled may be expressed as a number of revolutions or number of stress cycles;
   iii) calculating the load acting on each bearing (115) and on each gear (105, 107, 110), based on the received sensor signals and on gearbox geometry;
   iv) calculating a scale parameter $A_i$ of a Weibull distribution associated with the life of each gear and bearing, based on a probabilistic life that is determined from the load calculated in step iii) and a known rating for each of these components, to obtain an operating condition severity $A_i^{1/k_i}$, where $k_i$ is a known shape parameter of the Weibull distribution;

v) calculating a used capacity $c_i(t)$ of each bearing and each gear, based on $c_i = A_i^{1/k_i}L_i$, by summing the operating condition severity $A_i^{1/k_i}$ obtained for each time interval multiplied by the distance travelled $L_i$ by the component during the associated time interval, and

vi) calculating a used capacity $C(t)$ for the gearbox, based on the used capacity calculated for each component in step v) and on a shape parameter $k_s$ of a Weibull distribution associated with the life of the gearbox, whereby $k_s$ is derived from values of used capacity $c_i$ obtained at different distances travelled, which may be determined based on modelling and simulation or on a selection of previously stored values for $c_i(t)$ and associated distance travelled.

2. Method of claim 1, wherein the distance travelled $L_i$ by each gear (105, 107, 110) and each bearing (115) is expressed as a distance travelled by a reference component, which may be the planet carrier (125) or one of the gears or bearings, and wherein the probabilistic life that is determined for each gear and bearing in step iv) is translated in terms of the distance travelled by the reference component.

3. Method of claim 1 or 2, comprising further steps of:

   • calculating a remaining useable capacity c' for the gearbox based on:

$$c' = \sqrt[ks]{C(t)^{ks} - \log(\alpha) - C(t)}$$

   where $\alpha$ denotes a given level of confidence that the gearbox can exhibit the remaining useable capacity c' in addition to the calculated used capacity $C(t)$; and
   • calculating a remaining life L' for the gearbox based on

$$L' = c' / A_F^{1/k}$$

   whereby $A_F^{1/k}$ is an expected future operating condition severity that is estimated based on previously calculated values for used capacity $C(t)$ obtained during a time period in the past.

4. Method of any preceding claim, comprising a further step of calculating the probability $\alpha$ that the gearbox can exhibit a given amount of remaining capacity c' in addition to the calculated used capacity $C(t)$ based on.

$$\alpha = \exp(C(t)^{ks} - (c' + C(t))^{ks})$$

5. Method of claim 4, comprising a further step of calculating the given amount of remaining capacity c' in terms of a period of time ahead $t_m$ based on values calculated for $C(t)$ during a relevant operational period in the past $[t_1, t_2]$ according to:

$$c' \approx \frac{C(t2) - C(t1)}{t2 - t1} t_m$$

6. Method of any preceding claim, further comprising steps of:

   • calculating a load sharing factor $K_y$ based on the received sensor signals, whereby $K_y$ is indicative of uneven load distribution among the planet gears (110); and
   • using the calculated load sharing factor to adjust the load calculated in step iii) for each component.

7. Method of any preceding claim, wherein step i) comprises receiving strain signals from at least two strain sensors fixed to an outer circumference of the ring gear (105), the method comprising further steps of:

   • deriving a spatial strain distribution of the ring gear, based on the received strain signals, from a matrix P(t) of unknown strain basis function associated with a payload, the payload being defined as the torque on the planet carrier (125);
• calculating P according to:

$$P = S \cdot B_0 \cdot pinv(Ap \cdot B_0),$$

wherein

S is a measurement matrix containing the signals received from the strain sensors at a plurality of sampling intervals;
*Ap* is a signature matrix containing signatures that describe how the sensor signals are influenced by the strain basis functions associated with the payload; Bo is a null space of a signature matrix B that contains signatures which describe how the sensor signals are influenced by strain basis functions associated with a disturbance load;
and

• calculating a torque on the planet carrier and a rotational speed of the planet carrier, based on P(t), wherein the distance travelled by each component in step ii) is derived from the rotational speed of the planet carrier (125) and load on each component calculated in step iii) is derived from the calculated torque.

8. Method of claim 7, wherein the signature matrix Ap is determined in advance based on modelling or testing, and/or wherein the method comprises a further step of deriving the signature matrix Ap from the measurement matrix S by:

• transposing S to obtain a matrix S';
• multiplying S' by S; and
• decomposing S'*S via a singular value decomposition or an eigen vector/eigen value decomposition.

9. Method of claim 8, wherein the signature matrix Ap is derived from the measurement matrix S and the method further comprises:

• deriving a scaled matrix $A_{sc} = ApK^{-1}$, where K is a diagonal scaling matrix containing gain factors that scale the amplitude measured by an individual sensor to include position-dependent amplitude differences; and
• calculating the matrix of time basis functions P(t) associated with the payload using $A_{sc}$.

10. Method of any claims 7-9, wherein the torque calculated during each time interval is an unscaled torque $T_u(t)$ and the method comprises further steps of:

• detecting events when a rated torque at a rated speed is achieved during gearbox operation;
• determining a calibration factor c based on the detected events; and
• calculating a calibrated torque $T_c(t) = cT_u(t)$.

11. Method of any of claims 7 - 10, dependent on claim 4, wherein the load sharing factor and torque are calculated in real time and wherein the method comprises a further step of monitoring changes in the load sharing factor calculated at a certain torque levels, in order to detect a degradation trend for early detection of component faults.

12. Measurement and life estimation system for a planetary gearbox (100) comprising a sensor arrangement for obtaining field operation data relating to speed and loading of the gearbox components, and a processing unit (150) that is configured to execute the method steps of any preceding claim.

13. System of claim 12, wherein the sensor arrangement comprises at least one fiberoptical sensor module (FOS) (140) having n evenly spaced strain sensors (S1, S2, ..) configured for attachment to an outer circumference of the outer ring gear (105), whereby in attached condition the strain sensors are arranged with an angular spacing θ and cover at least a segment of the outer circumference equal to 90 degrees/b, wherein the spacing θ between the sensing elements is 360 degrees divided by a prime number between 17 and 37.

14. System of claim 12, wherein the at least one FOS module (140) comprises a strip (310, 310A) having a groove in which at least a section of the associated sensing fibre (340) is arranged, whereby the sensing fibre is attached to the strip at longitudinal ends of the strip and whereby at the location of the strain sensing elements, the strip comprises holes (315), such that when the strip is placed on the outer circumference of the ring gear, the strain sensing elements can be fixed directly to the circumference.

15. System of any of claims 12 - 14, comprising a plurality of FOS modules (140) configured for attachment around the full circumference of the outer ring gear (105), wherein the processing unit (150) is further configured to calculate a load sharing factor $K_y$ associated with the planet gears at each time instant by:

   • defining a virtual sensor for each planet location, being a location where maximum strain is measured;
   • estimating the strain level at that location using the measurement of a subset of sensors surrounding the planet; and
   • comparing the strain level estimated at the location of each virtual sensor to calculate the load sharing factor $K_y$.

Figure 1

Receive sensor data relating to loading and speed of gearbox components — 201

Calculate distance travelled by each gear and bearing during each time interval t — 202

Calculate load on each gear and bearing during each time interval t — 203

Derive operating condition $A^{1/k}$ for each gear and bearing, using calculated load and known dynamic rating — 204

Calculate used capacity $c(t)$ of each gear and bearing by summing product of $A^{1/k}$ and distance travelled as calculated for each time interval — 205

Calculate used capacity $C(t)$ of gearbox, based on used capacity $c(t)$ calculated for each gear and bearing and on a shape parameter $k_S$ of a Weibull life distribution for the gearbox — 206

Calculate remaining capacity $c'$ for gearbox based on conditional probability that gearbox can exhibit $c'$ with a desired level of confidence — 207

Calculate RUL for gearbox based on $c'$ and an expected future operating condition severity that is estimated based on values for $C(t)$ calculated during a period in the past — 208

Figure 2

315

311

310

Figure 3a

315

312

340

310A

Figure 3b

340

Europäisches
Patentamt

European
Patent Office

Office européen
des brevets

# EUROPEAN SEARCH REPORT

**Application Number**

EP 24 16 4602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 1 930 855 A2 (GEN ELECTRIC [US]) 11 June 2008 (2008-06-11) * paragraph [0010] - paragraph [0018]; figures 1-3 * | 1-15 | INV. G01M13/021 F16H57/01 G01M13/04 |
| A | US 2019/204182 A1 (YAMASHITA TOMOAKI [JP] ET AL) 4 July 2019 (2019-07-04) * paragraph [0001] - paragraph [0005] * * paragraph [0039] - paragraph [0052]; figures 1-3 * | 1-15 | |
| A | Kim Hack-Eun: "Machine prognostics based on health state probability estimation", Thesis Queensland University of Technology, 1 January 2010 (2010-01-01), pages 1-169, XP055888247, Retrieved from the Internet: URL:https://eprints.qut.edu.au/41739/1/Hack-Eun_Kim_Thesis.pdf [retrieved on 2022-02-07] * pages 115, 116 * | 1-15 | |

**TECHNICAL FIELDS SEARCHED    (IPC)**

G01M
F16H

The present search report has been drawn up for all claims

| Place of search | Date of completion of the search | Examiner |
|---|---|---|
| The Hague | 16 August 2024 | Reto, Davide |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 4602

16-08-2024

| Patent document cited in search report | | Publication date | Patent family member(s) | | Publication date |
|---|---|---|---|---|---|
| EP 1930855 | A2 | 11-06-2008 | CA | 2612039 A1 | 08-06-2008 |
| | | | CN | 101196432 A | 11-06-2008 |
| | | | EP | 1930855 A2 | 11-06-2008 |
| | | | ES | 2405359 T3 | 30-05-2013 |
| | | | US | 2008140349 A1 | 12-06-2008 |
| US 2019204182 | A1 | 04-07-2019 | DE | 112017002650 T5 | 07-03-2019 |
| | | | JP | 6650030 B2 | 19-02-2020 |
| | | | JP | WO2017203868 A1 | 07-03-2019 |
| | | | SE | 1830341 A1 | 19-11-2018 |
| | | | US | 2019204182 A1 | 04-07-2019 |
| | | | WO | 2017203868 A1 | 30-11-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1930855 A

- GB 2582597 A